# EUROPEAN PATENT SPECIFICATION

(11) **EP 2 246 101 B1**
(45) Date of publication and mention of the grant of the patent: **03.05.2017**
(21) Application number: 10155564.7
(22) Date of filing: 05.03.2010
(51) Int. Cl.: F24F 13/14

(54) **Damper of a ventilation duct**
Dämpfer für ein Belüftungsrohr
Amortisseur d'une conduite de ventilation

(30) Priority: 30.04.2009 FI 20095485
(43) Date of publication of application: 03.11.2010
(73) Proprietor: Fläkt Woods AB, 55184 Jönköping (SE)
(72) Inventor: Lampinen, Esa, FI-33100 Tampere (FI)
(74) Representative: Heinänen Oy Patent Agency

(56) References cited:
- EP-A1- 2 181 733
- DE-A1- 2 259 656
- DE-U1-202008 006 786
- US-A1- 2009 093 209

## Description

The present invention relates to a damper of a ventilation duct, which damper comprises a hollow duct part, e.g. a cylindrical pipe, a turnable plate inside it for adjusting the airflow, a shaft fixed to the plate, and also an adjusting means, such as a turnable wheel, fixed to one end of the shaft outside the duct part for turning the damper plate manually.

A damper is used as a check valve and damper of the airflow in ventilation ducts. A damper is typically a cylindrical pipe section inside which is a turnable damper plate on a shaft. The damper plate can be adjusted steplessly between two extreme positions; fully open and fully closed. The invention is not restricted only to cylindrical dampers, but instead also other cross-sectional shapes of duct can come into question.

The damper plate of a damper is turned either manually or with a motor. The present invention relates to dampers comprising a damper plate that is adjusted manually. For this purpose an adjusting means, such as a handwheel or control handle, is fixed to the shaft of the damper plate outside the damper. A handwheel is typically used in small dampers, in which turning the plate is lighter. In dampers of large size, in which the turning movement of the damper plate has larger friction, and in which it is therefore harder to move the damper plate, a control handle, with which greater torque is obtained, may be used. In modern solutions a manually adjustable damper is this provided with either a turnable wheel or with a control handle according to need.

Nowadays the adjusting means of dampers is made so that e.g. an insulation layer that is 50 mm thick can be installed around a damper (as also around the rest of the ducting). If a pipe is to be insulated, the adjusting means must however remain visible so that in practice the adjusting means is raised approx. 50 mm from the surface of the flange. This is done by fixing a narrower pipe or stand to the damper protruding from its flange, e.g. a trimmed metal sheet through which the shaft of the damper plate extends to the adjusting means. This is done to all dampers regardless of whether they will be finally insulated or not. This causes additional work phases and waste of material in those cases in which the duct is not insulated. In addition, it causes an unnecessary increase in the size of the basic structure in an uninsulated case. The excess metal pipe also causes heat losses.

DE 20 2008 006 786 U1 discloses a fire damper, which comprises a hollow duct part, a turnable plate inside it, a shaft fixed to the plate and a means for turning the plate manually.

The aim of the current invention is to achieve a new type of damper in which the drawbacks of prior art do not occur. The invention is characterized in that a control handle provided with an insulation allowance is installed on top of the turnable wheel.

One preferred embodiment of the damper according to the invention is characterized in that the control handle can be installed into its position by pressing it onto the turnable wheel in the direction of the shaft of the damper plate.

One preferred embodiment of the damper according to the invention is characterized in that the shape of the internal rim of the control handle that will be on top of the turnable wheel is essentially the same as the shape of the external rim of the turnable wheel, in which case there is tight shape-locking between the parts in the torsion direction, and in that there is a snap joint between the control handle and the turnable wheel in the direction of the shaft of the damper plate.

Yet another preferred embodiment of the damper according to the invention is characterized in that the part of the control handle with which it is fixed to the turnable wheel is raised by the amount of the insulation allowance, e.g. approx. 50 mm.

By means of the invention many advantages are achieved compared to the state of the art. Only one type of different-sized dampers needs to be manufactured, i.e. the type which comprises a turnable wheel or an adjusting means of that kind. When more torque or insulation allowance is needed, a control handle is installed on top of the turnable wheel simply by pressing it into its position. Compared to the earlier situation, in which an insulation allowance was made in all dampers just to be on the safe side, with the invention considerable savings in materials are achieved and the work phases of manufacturing are reduced. Additionally, when the control handle with insulation allowance is made of plastic, better thermal insulation is achieved compared to an earlier metallic solution. The basic structure of the damper is shallower than before because an insulation allowance is no longer automatically made in the damper.

In the following, the invention will be described in more detail by the aid of a preferred embodiment with reference to the attached drawings, wherein
Fig. 1 presents the basic structure of a damper.
Fig. 2 presents the same basic structure as viewed from the side and additionally a control handle before installation into its position.
Fig. 3 presents a damper according to Figs. 1 and 2, but now the control handle is installed into its position.
Fig. 4 presents a control handle according to the invention viewed obliquely from below.
Figs. 5 and 6 present a turnable wheel according to the invention viewed from different directions.

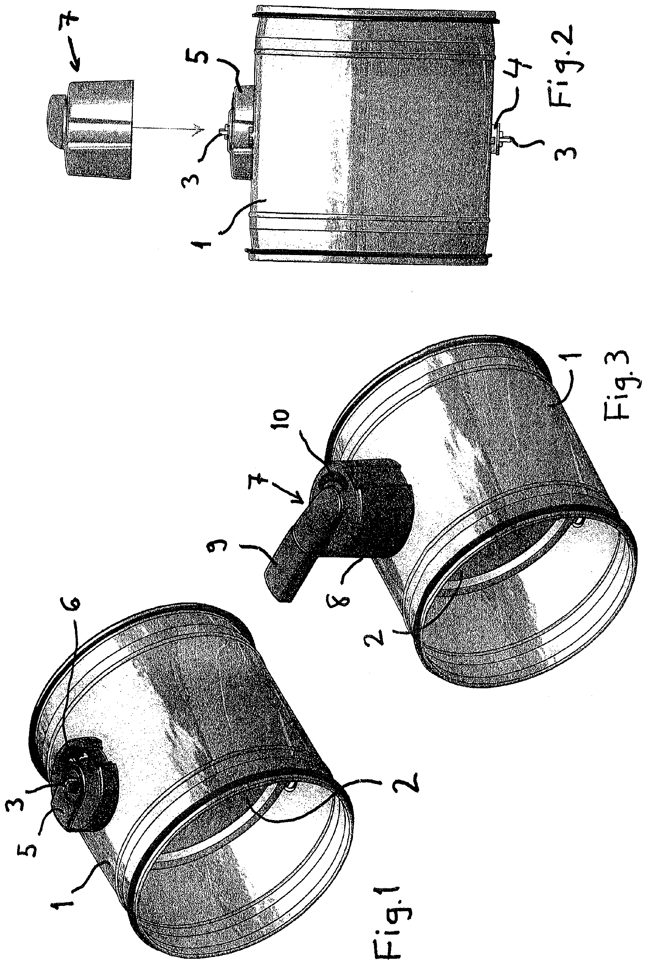

Fig. 1 presents a three-dimensional illustration of a damper, which comprises a cylindrical duct part 1, a turnable damper plate 2 of the shape of the cross-section of the duct, which is inside the duct and only a part of which is visible. The damper plate, with which the airflow is adjusted, can be turned steplessly between two extreme positions; fully open and fully closed. A shaft 3 extending through the duct part 1 is fixed to the damper plate, both ends of which shaft can be seen in Fig. 2. The shaft does not actually have to extend completely through the duct part, which reduces the number of holes to be made in the duct part. Namely, in ducts of small size it is often sufficient that the shaft is fitted on a bearing to the duct part at one of its ends and is free at its other end. In the bottom part of Fig. 2 a bearing part 4 is fixed to the shaft 3, and in the top part a turnable wheel 5. The turnable wheel 5 is thus, as presented in the figures, quite close to the outer surface of the duct part or even touching it.

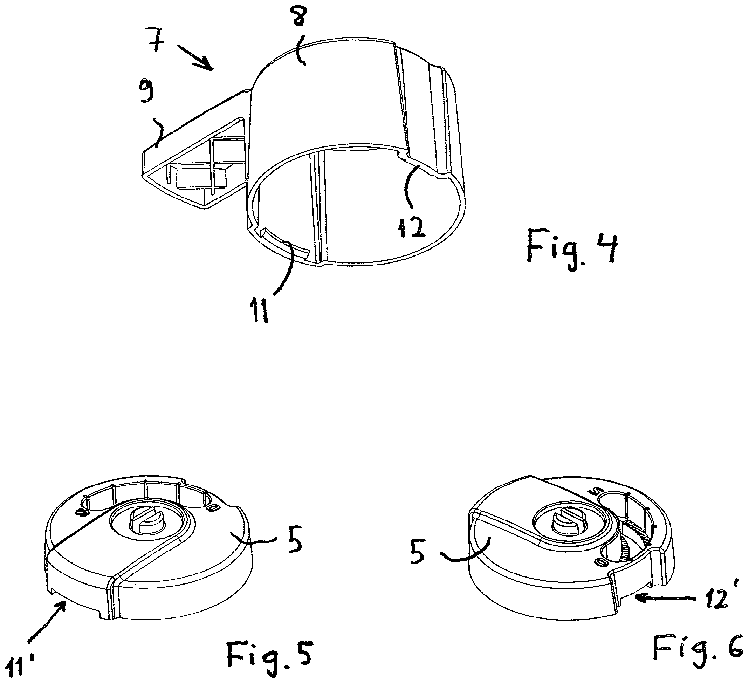

The turnable wheel 5 is shaped so that a good grip is obtained from it. In practice the turnable wheel can, of course, be shaped in many different ways. What is essential is that by means of it the position of the damper plate can be easily adjusted. The turnable wheel 5 also comprises a curved aperture 6, which is best seen in Figs. 5 and 6. A screw (not shown) is rotated through the aperture into the duct part 1 in a manner that is in itself prior art, in which case the screw functions as a stop for the aforementioned extreme positions. By means of the screw it is also possible using a prior-art method to lock the desired position of the damper plate by tightening the screw so tight that the turnable wheel cannot be turned.

Fig. 2 presents also presents a control handle 7 according to the invention before it is installed on top of the turnable wheel. As mentioned before, a control handle 7 is not normally needed in small, uninsulated dampers. In this case the structure of a damper according to Fig. 1 is adequate. However, in dampers of larger size adjustment of the turnable wheel manually can be too hard, in which case a control handle 7 is needed to increase the torque. Likewise, if the duct (and at the same time also the damper) must be insulated, the turnable wheel structure of Fig. 1 would remain below the insulation layer. The adjustment structure must therefore be raised by installing the control handle 7 into its position.

In Fig. 3 the control handle 7 is installed into its position. As can be seen, the control handle comprises a continuous piece that comprises a fixing-and-raising part 8 and also a handle 9. The control handle is preferably manufactured from plastic, which conducts heat badly and thus functions as a better thermal insulator than e.g. metal. The material of the control handle is not, however, restricted to plastic, but instead according to need it can be any material whatsoever that is suited to the purpose. An aperture 10 is made in the control handle, which aperture is at the same point as the aperture 6 of the turnable wheel, in which case a screw (not presented) can be rotated with a screwdriver through the aperture 10. The height of the fixing-and-raising part 8 is defined according to the normal insulation layer, e.g. 50 mm, so that despite the insulation at least the handle of the control handle 7 remains visible and by means of it the necessary adjustment procedures can be performed. In addition, also the aperture 10 must be visible, so that the locking screw can be accessed via the aperture 10.

The shape of the hollow fixing-and-raising part 8 of the control handle 7 is presented in Fig. 4 obliquely from below. The shape of the internal rim of the part 8 corresponds to the shape of the external rim of the turnable wheel 5, in which case the control handle shape-locks to the turnable wheel in the torsion direction. In addition, the fixing-and-raising part 8 is provided on its bottom edge with two fixing claws 11, 12, which lock into the corresponding grooves 11', 12' (Figs. 5 and 6) of the turnable wheel 5 with so-called snap joints.

It is obvious to the person skilled in the art that the invention is not limited to the embodiment presented above, but that it can be varied within the scope of the claims presented below. Like the control part 7, also the turnable wheel 5 is preferably made of plastic material, but the invention is not restricted to this material.

The shapes of the turnable wheel and of the control part can differ. What is essential from the viewpoint of the invention is that the control handle 7 can if necessary be easily installed on top of the turnable wheel so that when turning the control handle the turnable wheel 5 also turns while further turning the damper plate 2 via the shaft 3. An embodiment in which the control handle 7 is pressed on top of the turnable wheel in the direction of the shaft of the damper plate is described above. Also another installation method may come into question, e.g. by sliding the control handle along grooves shaped for the purpose in a perpendicular direction with respect to the direction of the shaft, or some other fast installation method, preferably without tools.

The effects of the different positions of the damper plate are not explained in more detail here because the invention does not actually relate to them and they are prior art. Although the invention is described above in connection with a round duct, the cross-sectional shape of the duct can be another shape, e.g. square or some other rectangle. The fixing of the duct part of the damper is not described in this context either, because it is generally prior art and adds nothing innovative to the invention.

## Claims

1. Damper of a ventilation duct, which damper comprises a hollow duct part (1), e.g. a cylindrical pipe, a turnable plate (2) inside it for adjusting the airflow, a shaft (3) fixed to the plate, and also an adjusting means (5) fixed to one end of the shaft outside the duct part for turning the damper plate manually, **characterized in that** a control handle (7) provided with an insulation allowance is installed on top of the adjusting means (5).

2. Damper according to claim 1, **characterized in that** the control handle (7) can be installed into its position by pressing it onto the adjusting means (5) in the direction of the shaft (3) of the damper plate (2).

3. Damper according to claim 1 or 2, **characterized in that** the shape of the internal rim of the control handle (7) that will be on top of the adjusting means (5) is essentially the same as the shape of the external rim of the turnable wheel, in which case there is tight shape-locking between the parts in the torsion direction, and **in that** there is a snap joint (11, 11'; 12, 12') between the control handle (7) and the adjusting means (5) in the direction of the shaft (3) of the damper plate (2).

4. Damper according to any of claims 1-3, **characterized in that** the part (8) of the control handle (7) with which it is fixed to the adjusting means is raised by the amount of the insulation allowance, e.g. approx. 50 mm.

## Patentansprüche

1. **Klappeneinrichtung eines Lüftungskanals,** die Einrichtung (damper) mit einem hohlen Kanalabschnitt (1), z.B. als zylindrisches Rohr, einer drehbaren Platte (2) darin zum Einstellen des Luftstroms, einer Welle (3), die an der Platte befestigt ist, und einer Einstellvorrichtung (5), die an einem Ende der Welle, außerhalb des Kanalabschnitts, befestigt ist, zum manuellen Drehen der Klappe (damper plate), **dadurch gekennzeichnet, dass** ein Steuerhebel (7) mit einem Isolierungs-Abstand oder-Toleranz (allowance) oben auf der Einstellvorrichtung (5) angebracht ist.

2. Klappe nach Anspruch 1, **dadurch gekennzeichnet, dass** der Steuerhebel (7) durch Aufpressen auf die Einstellvorrichtung (5) in Richtung der Welle (3) der Klappenplatte (2) in seine Position angebracht werden kann.

3. Klappe nach Anspruch 1 oder 2, **dadurch gekennzeichnet, dass** die Form des internen Rands des Steuerhebels (7), der oben auf der Einstellvorrichtung (5) sein wird, im Wesentlichen gleich ist zu der Form des externen Rands des drehbaren Rads, wodurch ein enger Formschluss zwischen den Teilen in Torsions-Richtung vorliegt, und dadurch, dass eine Rastverbindung (11, 11'; 12, 12') zwischen dem Steuerhebel (7) und der Einstellvorrichtung (5) in Richtung der Welle (3) der Klappenplatte (2) vorliegt.

4. Klappe nach einem der Ansprüche 1 bis 3, **dadurch gekennzeichnet, dass** der Abschnitt (8) des Steuerhebels (7), mit dem er an der Einstellvorrichtung befestigt ist, um das Maß der Isolierungs-Toleranz, z.B. etwa 50 mm, erhaben ist.

## Revendications

1. Registre d'une conduite de ventilation, lequel registre comprend une partie de conduite creuse (1), par exemple un tuyau cylindrique, une plaque tournante (2), dans ladite partie de conduite creuse (1), pour régler l'écoulement d'air, une tige (3) fixée à la plaque, ainsi que des moyens de réglage (5) fixés à une extrémité de la tige, à l'extérieur de la partie de conduite, pour tourner la plaque de registre manuellement, **caractérisé en ce qu'**une poignée de commande (7) pourvue d'une tolérance pour isolation est installée en haut des moyens de réglage (5).

2. Registre selon la revendication 1, **caractérisé en ce qu'**on peut installer la poignée de commande (7) dans sa position en la pressant sur les moyens de réglage (5) dans le sens de la tige (3) sur la plaque de registre (2).

3. Registre selon la revendication 1 ou 2, **caractérisé en ce que** la forme du bord intérieur de la poignée de commande (7) qui se trouvera en haut des moyens de réglage (5) présente globalement la même forme que le bord extérieur de la molette tournante (5), moyennant quoi il y a un verrouillage par complémentarité de forme entre les pièces dans le sens de torsion, et **en ce qu'**il y a une liaison par encliquetage (11, 11' ; 12, 12') entre la poignée de commande (7) et les moyens de réglage (5) dans le sens de la tige (3) de la plaque de registre (2).

4. Registre selon l'une quelconque des revendications 1 à 3, **caractérisé en ce que** la partie (8) de la poignée de commande (7) avec laquelle ladite poignée (7) est fixée aux moyens de réglage est surélevée suivant la tolérance pour isolation, par exemple d'à peu près 50 mm.
